# EUROPEAN PATENT APPLICATION

(11) **EP 1 515 228 A2**
(43) Date of publication of application: **16.03.2005**
(21) Application number: 03078924.2
(22) Date of filing: 11.12.2003
(51) Int. Cl.: G06F 9/44

(54) **CATEGORIZATION AND DISPLAY OF DATA BY A COMPUTER SYSTEM USER INTERFACE**

(30) Priority: 08.09.2003 EP 03077834
(71) Applicant: SAP Aktiengesellschaft, 69190 Walldorf (DE)
(72) Inventor: Beringer, Joerg, 60431 Frankfurt (DE); Zimmermann, Juergen, 69168 Wiesloch (DE); Aigner, Werner, 93497 Willmering (DE)
(74) Representative: Prins, Adrianus Willem, Mr. Ir.

(57) **Abstract**

A method for outputting data at a user-interface (100) in a computer system (1). The method comprises receiving categorised data at the user-interface (100) from each of at least two computer programs (200,210). The categorised data is categorised into at least two data categories. At the user-interface (100) data from at least two computer programs (200,210) which is categorised in a category is represented together, and separate from data categorised in another category.

## Description

The invention relates to a method for outputting data in a computer system. The invention further relates to a computer system and a client system. The invention also relates to a computer program product and an article of manufacture.

On a computer system several applications or computer programs may be running simultaneously. It is known to represent (parts of) those running programs simultaneously to a user at a user-interface. For example in the Windows® operating system, when running different programs, for each program a separate window is present at a graphical user-interface (GUI), in which window a part of the respective program is represented. Thus, a user can perceive several programs simultaneously at a single user-interface.

Also, from computer systems running an enterprise resource system, role based integration platforms are known. In a role based integration platform, information is presented to a user at the user-interface from different programs running simultaneously, but the presented information is limited to information which is related to the role of a user in the enterprise. Thus, only information relevant to the user is presented and less redundant information is presented.

However, a drawback of these known methods and systems is that still separate programs are represented at the user-interface. Thus, a user has to absorb information from each program separately and then merge the information from the different programs. For the role base integration platforms, a user receives only information relevant to his role, but, since the information is represented in different programs, it is difficult to understand, inter alia, his role, the status of the work, and to decide what to do next. Accordingly, the known systems and methods have a low ease of use.

It is an object of the invention, to provide a method for outputting data in a computer system with an increased ease of use. The invention therefore provides a method according to claim 1.

Such a method provides an increased ease of use, because information from different programs, but categorised in the same data category is presented together. Thus, a user does not have to process the data from different programs to integrate the information. Accordingly the ease of use is increased.

Furthermore, the invention provides a computer system according to claim 8. The invention also provides a client system according to claim 10. The invention also provides a computer program product according to claim 11, and an article of manufacture according to claim 12.

Specific embodiments of the invention are set forth in the dependent claims. Further details, aspects and embodiments of the invention will be described, by way of example only, with reference to the attached drawing.

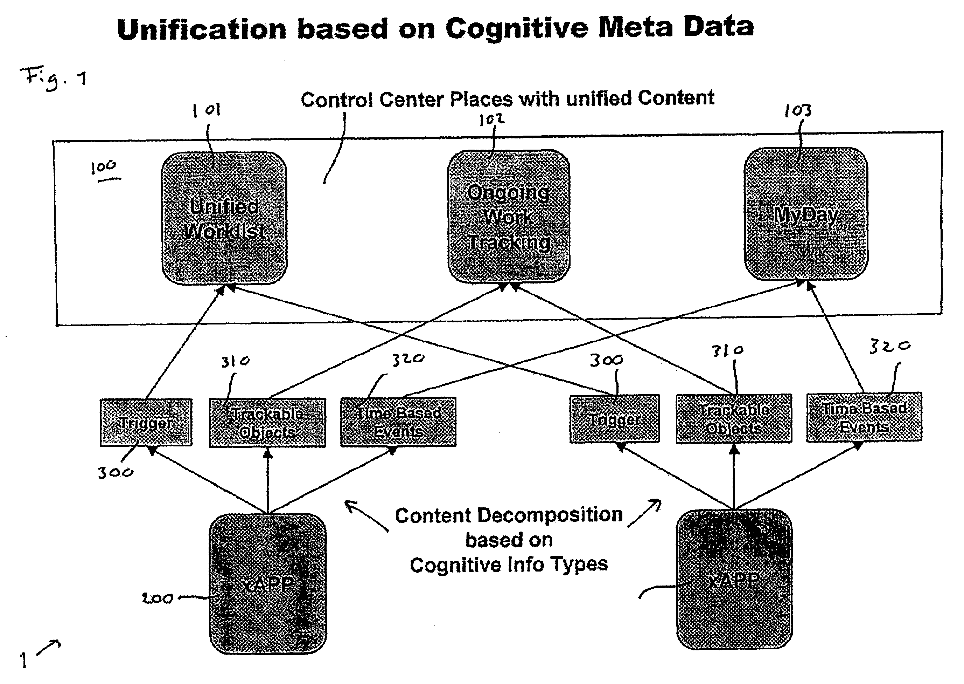

FIG. 1 schematically shows an example of an embodiment of a computer system according to the invention.

The example of a computer system 1 of FIG. 1 comprises a user-interface (UI) 100 at which information can be outputted in a for humans perceptible form. At the UI, for example, (parts of) computer programs running on the computer system 1 can be represented, for example as audio, graphics or otherwise. In this example, the UI is supposed to comprise a graphical user-interface (GUI) at a display device. However, the UI may likewise comprise other types of interfaces.

On the computer system 1, computer programs 'xApp' 200,210 are running. In the example shown in FIG. 1, two computer applications or computer programs 200,210 are running on the computer system 1. However, the number of running programs may likewise be different. Furthermore, the computer programs may be running simultaneously on a single processor. The computer programs may likewise be running on separate processors.

The computer system 1 may comprise any suitable programmable device, such as a single computer device, such as a desktop computer or a personal digital assistant (PDA). However, the computer system 1 may likewise comprise two or more separate computer devices which are connected by means of a data communication network. The computer programs 200,210 may then, for example, be running on separate server devices which are communicatively connected to a client computer which comprises the user-interface 100.

In this example, at the user-interface 100, for example a web-browser program may be graphically represented as a web-browser user-interface, which program allows access to resources, such as programs, data and services of a computerised enterprise management system, such as is sold by SAP A.G. of Waldorf, Germany. In that case, the sub-interfaces 101-103 may be represented in the web-browser user-interface, for instance as data fields, tables, or otherwise.

In the example of FIG. 1, the computer programs 200,210 are communicatively connected to the computer programs 200,210 via categorising devices 300,310,320. The computer programs 200, 210 can output data to the UI 100 and receive data from the UI. The GUI 100 comprises sub-interfaces 101-103 in which data generated by means of the computer programs 200,210 is outputted.

As indicated with the arrows in FIG. 1, data generated by means of the computer programs 200,210 is transmitted from the computer programs 200,210 to the user-interface 100 via the categoriser devices 300,310,320. The categoriser devices 300,310,320 decompose or organise the data from the programs 200,210 in different categories, in this example cognitive info type categories. In the example of FIG. 1, each of the categoriser devices 300,310,320 is connected to a different one of the sub-interfaces 101,102,103. Each of the categoriser devices 300,310,320 transmits the data categorised in one of the category to the sub-interface connected thereto.

Thus, in each sub-interface 101-103 data originating from different computer programs but categorised in the same category is represented. Accordingly, the ease of use is increased because several programs may be running on the computer system while a user is presented related information from different programs in a single user-interface.

Furthermore, the computer programs interacting with the user-interface can be changed in a simple manner, because the data from the computer programs is categorised. Thus, for instance other computer programs may be added without the necessity of adapting the user-interface, because the data from the computer programs is categorised and the data categories already have a sub-interface in the user-interface.

In the example of FIG. 1, two sets of similar categorisers are present and each of the programs 200,210 is connected to a different set of categorisers. The streams of data from the programs 200,210 are categorised separately by one of the sets of categorisers. The streams of data from the computer programs 200,210 categorised in the same category are merged at the user-interface and information about the specific computer program which generated data can therefore be obtained at the user-interface. However, the computer programs may likewise use the same set of categorisers. In such case, if information about the origin of data is desired at the user-interface, data can be added to the categorised data about the data's origin.

Because information about the origin of the data is present at the user-interface, additional functionality may be implemented in the computer system 1. For instance, interaction between the user and the separate computer programs is possible. Accordingly, data can for example be inputted at the user-interface and transmitted to a specific computer program in response to the representation of data at the user-interface. However, other features using the information may likewise be used.

The categoriser devices 300,310,320 may for example be implemented as a framework of resources which can be used by the programs 200,201 to categorise the data. For example, the framework may comprise a memory in which object classes, personalized repositories, UI patterns or other resources are stored, which can be accessed and used by the programs 200,201 to provide data in the desired categories and transmit the data to a suitable sub-interface 101-103.

Depending on the type of data, the resources available in the framework may be different. For some types of data, e.g. trigger, trackable objects, time based events, the frame work may for example comprise a memory with a central repository in which the computer programs 200,201 can register their objects. The framework may then be provided with a delivery mechanism (universal inbox) or UI patterns to display data about the objects stored in the repository at the UI. For other types of data, for example, a central application may be provided which performs a query in all active roles of a user and dynamically built pages or link lists of services of a specific type across roles at the user interface.

The example of fig. 1 is particularly suited, but not limited to, an implementation in an enterprise resource system. The categoriser devices 300,310,320 categorise the data in user-centric categories that correspond to cognitive archetype-like info classes, such as how people work in general and what the basic issues are, independent of the concrete subject matter or the role of the user in an enterprise. For example, that people want to observe and monitor their work, that there exist triggers that require an action by the user, that complex tasks are broken down into sub-tasks and steps, that people have to decide what to do next based on urgency and relevance. In the example of FIG. 1, the categoriser devices 300,310,320 divide the data from the computer programs 200,210 in the categories: 'work trigger', 'trackable objects', and 'time based events'.

It is found that categorising in such categories, and the categories in the example of fig. 1 in particular, provides a distinction between data (and accordingly allows a representation thereof in the sub-interfaces 101-103) which can be processed quickly by a user and accordingly increases the ease of use of the computer system 1.

The work trigger category comprises data in response which the user has to start a certain task, for example hire new personnel, book a flight or otherwise. The data in the work trigger category may also be data to which the user has to respond to initiate performing certain steps by the computer system, for example cleaning up a hard-disk or otherwise. In the example of FIG. 1, the data in the work trigger category is represented in the sub-interface 101, the 'unified worklist'.

Thus, all new tasks imposed by the different programs are represented in the same sub-interface and the user can easily grasp all new tasks. Thereby, the user can easily determine which tasks are to be performed according to the different programs. Optionally, the user may use information from the other sub-interfaces, for instance to determine which task has priority.

The trackable objects category comprises data relating to the status of ongoing tasks and processes, such as for example at what phase a project is currently in or if a budget is still in the expected range. The data in the trackable objects category is represented in the sub-interface 102, 'ongoing work tracking'.

Thus, the status of ongoing tasks and projects from different programs are represented in the same sub-interface and the user gets an overview of the status of different projects and tasks or otherwise. Thereby, the user can be informed quickly about the status of projects or tasks processed by different computer programs and, for instance, determine priorities

The time based events category comprises data relating to events which happen at a certain time-moment, such as a deadline, appointments or otherwise. The data in the time based events category is represented in the sub-interface 103, 'MyDay'.

Thus, the time based events from different programs are represented in the same sub-interface and the user get an non-complicated overview of the status of the different time limits imposed on him. Thereby, process security is increased as well, since the user can easily determine possible conflicts between events from different programs.

The computational aspects described here can be implemented in digital electronic circuitry, or in computer hardware, firmware, software, or in combinations of them. Where appropriate, aspects of these systems and techniques can be implemented in a computer program product tangibly embodied in a machine-readable storage device for execution by a programmable processor, and method steps can be performed by a programmable processor executing a program of instructions to perform functions by operating on input data and generating output.

The invention may also be implemented in an article of manufacture with a computer usable medium having computer readable instructions embodied therein for providing access to resources available on that computer, the computer readable instructions comprising instructions to cause the computer to perform a part of a method according to the invention. The invention may also be implemented as a computer program for running on a computer system, at least including code portions for performing steps of a method according to the invention when run on a computer system or enabling a general propose computer system to perform functions of a filter device according to the invention. Such a computer program may be provided on a data carrier, such as a CD-ROM or diskette, stored with data loadable in a memory of a computer system, the data representing the computer program. The data carrier may further include a data connection, such as a telephone cable or a wireless connection transmitting signals representing a computer program according to the invention.

It should be noted that the above-mentioned embodiments illustrate rather than limit the invention, and that those skilled in the art will be able to design alternatives without departing from the scope of the appended claims.

In the claims, any reference signs placed between parentheses shall not be construed as limiting the claim. The word 'comprising' does not exclude the presence of other elements or steps than those listed in a claim. The word 'a' is used as an equivalent of 'one or more' or 'at least one'.

## Claims

1. A method for outputting data at a user-interface (100) in a computer system (1), comprising:
receiving categorised data at the user-interface (100) from each of at least two computer programs (200,210), which categorised data is categorised into at least two data categories,
representing data from at least two computer programs (200,210) at the user-interface (100) which is categorised in a category together, and separate from data categorised in another category.

2. A method as claimed in claim 1, further comprising:
generating data by means of at least two computer programs (200,210),
categorising said data into at least two categories, and transmitting said categorised data to the user-interface (100)

3. A method as claimed in claim 1 or 2, further comprising:
transmitting data representing information about the specific computer program which generated data to the user-interface (100).

4. A method as claimed in any one of the preceding claims, wherein said categories comprise:
a trigger category, comprising data representing information about tasks to be performed;
a trackable objects category, comprising data representing information about ongoing work;
a time-based events category, comprising data representing information about events to happen at a time-moment.

5. A method as claimed in any one of the preceding claims, performed in a client-server system comprising at least one server system communicatively connected to at least one client system and wherein the computer programs (200,210) are running on one or more server systems and the user-interface (100) is present at a client system.

6. A method as claimed in any one of the preceding claims, comprising categorising data from at least one of the programs is separately from data from other programs; and merging data from different programs which is categorised in the same category.

7. A method for preparing data to be outputted at a user-interface (100), comprising:
receiving data from at least two running programs;
categorising said data in at least two data categories; and
transmitting data in a category to a first part of a user-interface (100), and data categorised in another category to a second part of a user-interface (100).

8. A computer system (1), comprising:
one or more processor devices arranged for running at least two computer programs (200,210),
a categorising device (300,310,320) for categorising the data originating from said at least two computer programs (200,210) into at least two data categories,
a user-interface (100) communicatively connected to said one or more processor devices and said categorising device (300,310,320), the user-interface (100) comprising:
at least two sub-interfaces (101-103) each arranged for representing data categorised in one category from at least two computer programs (200,210) together, and
separately from data categorised in another category.

9. A computer system (1) as claimed in claim 8, comprising a client-system at which the user-interface (100) is present and at least one server-system communicatively connected to said client-system, which server-system is arranged for running at least one of said computer programs (200,210).

10. A client-system comprising a user-interface (100) which is communicatively connectable to at least one server system for receiving data from at least two running computer programs (200,210), which data is categorised in at least two categories;
the user-interface (100) comprising:
at least two sub-interfaces (101-103) each arranged for representing data from at least two computer programs (200,210) which is categorised in a category together, and
separate from data categorised in another category.

11. A computer program product, comprising program code portions for performing steps of a method as claimed in any one of claims 1-7 when run on a programmable apparatus.

12. An article of manufacture with a computer usable medium having computer readable instructions embodied therein for providing access to resources available on that computer, the computer readable instructions comprising instructions to cause the computer to perform the steps of a method as claimed in any one of claims 1-7
